# EUROPEAN PATENT SPECIFICATION

(11) **EP 0 434 566 B1**
(45) Date of publication and mention of the grant of the patent: **07.05.1997**
(21) Application number: 90403711.6
(22) Date of filing: 20.12.1990
(51) Int. Cl.: G11B 7/24, G11B 7/26

(54) **Optical recording medium and manufacturing method thereof**
Optisches Aufzeichnungsmedium und Verfahren zur Herstellung davon
Milieu d'enregistrement optique et méthode de fabrication pour ceci

(30) Priority: 21.12.1989 KR 1916589
(43) Date of publication of application: 26.06.1991
(73) Proprietor: LG ELECTRONICS INC., Seoul (KR)
(72) Inventor: Yeo, Woon Seong, Choongchungbook-Do (KR)
(74) Representative: Fort, Jacques

(56) References cited:
- EP-A- 0 132 410
- EP-A- 0 150 829
- EP-A- 0 178 578
- DE-A- 2 536 264

## Description

The present invention relates to an optical information storing medium such as optical discs and a method for manufacturing thereof in which a light reflecting material layer is formed on the flat surface of a substrate, and a light reactive material layer that is able to form an alloy with the light reflecting material layer by light reaction is doped on the surface layer of said light reflecting material layer, and when a light radiation of recording data is executed, a reflection rate difference is formed in a local form so that storing of various information is possible. Such an optical recording medium is known from EP-A-150 829, where interalia Ti and In are proposed.

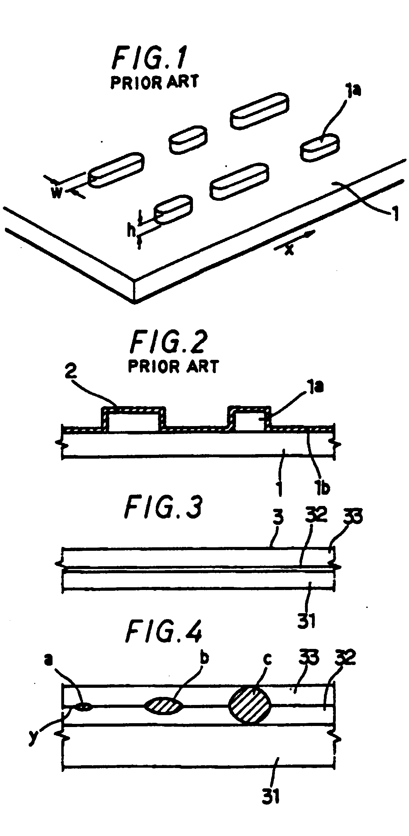

As an information storing medium having relation with such a technical field, compact disc like structural means such as compact disc player as FIGS. 1 and 2 can be cited.

Wherein, a convex portion formed on a substrate 1 has a predetermined length corresponding to a recording signal and in line with a recording direction. Its width w is normally 1µ m, and its height h is approximately 0.1µ m.

And when this is viewed by cutting and magnifying in section, as shown in FIG. 2, a light reflecting layer forms a convex portion 1a and flat portion 1b on the substrate 1, and in case when light is irradiated by laser and the like, the light reflection rate becomes less according to the diffusing operation of light at said convex portion 1a, while the light reflection rate of light becomes larger (more than about 70%) at the flat portion 1b so that recorded data are detected by such light variation.

And, the convex portion 1a on the substrate 1 is made by molding in corresponding to concave portion engraved in metal mold similarly with manufacturing method of conventional LP record disc.

However, since such a type of the light recording medium requires a metal mold and the like formed with concave and convex surfaces as above discription upon manufacturing, precise technical process is required, and particularly information can not be directly recorded and stored by light radiating means, and according to this, the storing means of data information becomes passively, and owing to limitation of applying range of optical information recording and limitation of capacity of unit recording, there has been a problem that the cost for information storing medium becomes high.

### SUMMARY OF THE INVENTION

Therefore, it is an object of the present invention to provide an optical recording medium and manufacturing method thereof in which above-described information recording medium can record predetermined information by instantly responding to light rediation outputting means, and information storing and applying range is broadened and simultaneously cost per unit recording capacity is required to be relatively lower.

A recording medium according to the invention is set out in claim 1.

Aluminium and indium are respectively utilized for above-described light reflecting material and light reactive material, and alloy of said alluminium and indium whose balanced eutectic temperature is 428 °K at 0.05 % of aluminium - 99.95% of indium, and the larger the quantity of aluminium, the more the melting temperature becomes increased.

As a result that such aluminium and indium layer are made to a thin film of 70 - 400 nm and alloying temperature (melted alloying temperature) is measured, it was found that it had a temperature range of 110°C - 230°C according to the interface condition between the layers, and while becoming to alloy, the light reflection rate was remarkably changed.

The change of the eutectic temperature of said aluminium and indium is resulted by large surface energy of thin film state metal, and particularly, it is judged that it is caused by the change of surface energy according to the intervening material such as oxygen, nitrogen and the like at the interface.

A method according to the invention is set out in claim 3.

### BRIEF DESCRIPTION OF THE DRAWINGS

FIG. 1 is fragmentary magnified perspective view of an optical recording medium according to the conventional technique,
FIG. 2 is a fragmentary longitudinal cross sectional view illustrating a state that light reflecting layer is doped on the optical recording medium according to the conventional technique,
FIG. 3 is a fragmentary longitudinal cross sectional view illustrating the structure of an optical recording medium of the present invention, and
FIG. 4 is a fragmentary magnified cross sectional view illustrating an operation of the optical recording medium of th present invention.

### DETAILED DESCRIPTION OF PREFERRED EMBODIMENT

Hereinafter, a preferred embodiment of the present invention will be described in detail with reference to the accompanying drawings.

FIG. 3 is a fragmentary longitudinal cross sectional view illustrating the structure of an optical recording medium according to the present invention, as shown in FIG. 3, it is structured in such a manner that a light reflecting material layer 32 is doped on a substrate 31, and a light reactive material layer 33 is doped on said light reflecting material layer 32.

The light reflecting material consisting of said light reflecting material layer 32 is aluminium and its thickness is maintained to the range of 70 - 250 nm, and the light reactive material consisting of said light reactive material layer 33 is made of indium and its thickness is maintained in the range of 70 - 400 nm.

On the other hand, manufacturing method of optical recording medium according to the present invention is as follows.

That is, in case when the aluminium 32 of flat surface is processed by covering on said substrate 31, it is processed by technique such as sputtering, vacuum depositing and the like which is reflecting layer forming technique upon manufacturing of the conventional compact disc.

And, in case when the indium layer 33 is doped on said light reflecting material layer 32, it is manufactured by sputtering or vacuum depositing or chemical vacuum depositing method in semiconductor so as the eutectic temperature of indium is maintained at 110 - 230°C when said indium makes eutectic alloy with aluminium.

Thus, when the doping is carried out so as the thickness of said aluminium layer 32 becomes 700 - 2500 Å, and the thickness of said indium layer 33 becomes 70 - 400 nm, in case when laser light (laser light wavelength is 830 nm) is radiated to the finished optical recording medium 3, aluminium and indium make alloy with each other, and it was found that reflection rate of laser light was 70% at sole of aluminium, but it was dropped to less than about 20% according to the making of alloy.

Reviewing in more detail the operation and effect of the present invention, it will be as follows.

According to said optical recording medium 3, after it is finished to manufacture, average reflection rate of the light radiated to the aluminium layer 32 of the optical recording medium 3 is maintained in light reflection rate of more than 70% and in case when information to be recorded to this is on-off modulated by laser light to thereby be made to incident upon the surface of the light reactive material layer 33, local temperature rising is produced on said radiated portion, and as shown in FIG. 4, the light reactive material (In)-light reflecting material (Al) alloy is made at the interface portion Y of the indium and aluminium layer 33,32.

At this moment, alloy forming portion formed at interface portion y in response to the total power (light power x time) of laser light and thickness of each layer is classified into a small alloy forming portion a, a medium alloy forming portion b as much as a diameter of laser light, and a large alloy forming portion c that two layers are completely alloyed, and it was found that the light reflection rate is changed according to the kind of such forming portions a, b, c.

And, eutectic temperature can be changed by controlling kind and quantity of remaining gas within vacuum tank upon forming aluminium and indium layers, and at this moment, the lower the eutectic temperature, either the more the laser power lowered or the more the time is shortened.

Therefore, the optical recording medium of the present invention produced in case when pressure within vacuum tank is made to 0,133 mPa (1 x 10⁻⁶ Torr) upon forming thin film and there in only remaining gas of inert gas such as Ar, Ne and the like, becomes to maintain the eutetic temperature of 110°C. At this moment, the eutectic temperature is increased by introducing the gas such as O₂, N₂, CH₄, and the like, and in case of each gas, change of the eutectic temperatures according to the partical pressure were as follows.

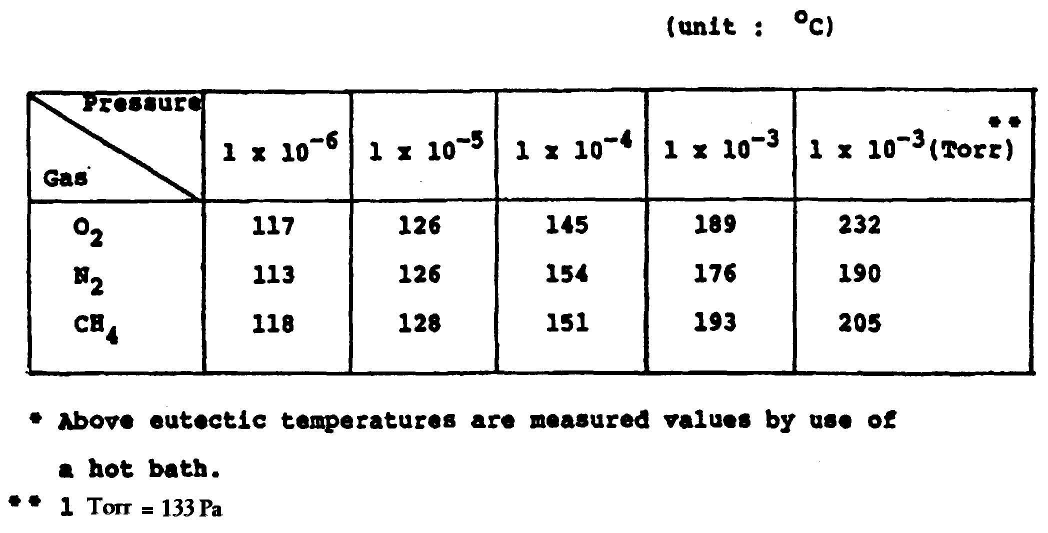

As described above, the eutectic temperature can be changed by controlling the thin film forming environment, and this means that means for controlling the alloying degree (kind of alloy forming portion) can be provided so as to be matched to previously established applying environment and laser output.

And, according to the result of measurement, the optical recording medium of the present invention in which the laser light is used by output of 10 mW and the eutectic temperature is controlled at 150°C, whose pulse time can be made to 1 nsec (reflection rate of alloy portion is 30%), and this means that signal recording of 1 GHz is possible.

As described above in detail, according to the present invention, various informations can be readily stored and recorded by instantly responding to the information record output of the laser light by the recording medium which can be provided by the present invention and thereby its applicable range is made possible to expand flexibly. Particularly, integrity of data storing technique per unit recording capacity can be increased. Therefore it is possible to utilize it with a relatively cheaper memory.

## Claims

1. An optical recording medium for recording and reading out information by light radiation means, comprising a substrate (1), a flat first layer (32) on said substrate (1), and a second layer (33) formed on said light reflecting material layer (32) arranged to form an alloy with said aluminium of said light reflecting layer upon the thermal action of light radiation, characterized in that the first layer is a light reflective layer of aluminium and the second layer is a light reactive layer of indium, the eutectic alloy being formed upon radiation having a melting point of from 110 to 230° C.

2. Optical recording medium according to claim 1, characterized in that said aluminium layer (32) has a thicknes of 70 - 250 nm, and said indium layer (33) has a thickness of 70 - 400 nm, and in that it is structured in such a manner that when a laser light is radiated, the reflection rate is approximately 70% for aluminium, and the reflection rate of the In-A1 eutectic alloy is decreased less than about 20%.

3. A method for manufacturing an optical recording medium, comprising the steps of :
forming a light reflecting material layer (32) of aluminium on a substrate (1) in flat by sputtering or vacuum deposition ; and
forming a light reactive material layer (33) of indium on said light reflecting material layer (32) by sputtering, vacuum deposition, or chemical vacuum deposition of semiconductor, which forms an alloy layer at an interface (y) due to thermal factor by light radiation,
wherein said light reflecting material layer and light reactive layer material layer are formed in an environment of gases such as O₂, N₂, CH₄ and the pressure of each gas is controlled, so that the eutectic temperature of the eutectic alloy being formed upon the normal action of light radiation is within the range of 110° C - 230° C.

## Patentansprüche

1. Optisches Aufzeichnungsmedium zum Aufzeichnen und Auslesen von Informationen mittels einer Lichtstrahlungseinrichtung, umfassend ein Substrat (1), eine flache erste Schicht (32) auf dem Substrat (1) und eine zweite Schicht (33), die auf der Schicht (32) aus lichtreflektierendem Material ausgebildet ist, die angeordnet ist, um mit dem Aluminium der lichtreflektierenden Schicht bei der Wärmeeinwirkung der Lichtstrahlung eine Legierung zu bilden, **dadurch gekennzeichnet, daß** die erste Schicht eine lichtreflektierende Schicht aus Aluminium ist und die zweite Schicht eine auf Licht ansprechende Schicht aus Indium ist, wobei die eutektische Legierung bei einer Strahlung mit einem Schmelzpunkt von 110 bis 230°C gebildet wird.

2. Optisches Aufzeichnungsmedium nach Anspruch 1, **dadurch gekennzeichnet, daß** die Aluminiumschicht (32) eine Dicke von 70 bis 250 nm hat, die Indiumschicht (33) eine Dicke von 70 bis 400 nm hat und daß es derart aufgebaut ist, daß bei Bestrahlung mit Laserlicht ausgestrahlt wird, die Reflektionsrate etwa 70% für Aluminium beträgt und die Reflektionsrate der eutektischen In-Al-Legierung auf weniger als etwa 20% verringert wird.

3. Verfahren zur Herstellung eines optischen Aufzeichnungsmediums, umfassend die folgenden Schritte:
Ausbilden einer flachen, lichtreflektierenden Materialschicht (32) aus Aluminium auf einem Substrat (1) durch Sputtern oder Vakuumabscheiden, und
Ausbilden einer auf Licht ansprechenden Materialschicht (33) aus Indium auf der lichtreflektierenden Materialschicht (32) durch Sputtern, Vakuumabscheiden oder chemisches Vakuumabscheiden des Halbleiters, wodurch eine Legierungsschicht an einer Grenzfläche (y) aufgrund des Wärmefaktors durch Lichtstrahlung ausgebildet wird,
wobei die lichtreflektierende Materialschicht und die auf Licht ansprechende Materialschicht in einer Umgebung von Gasen wie O₂, N₂, CH₄ ausgebildet wird und der Druck jedes Gases derart gesteuert wird, daß die eutektische Temperatur der eutektischen Legierung, die bei der normalen Einwirkung der Lichtstrahlung gebildet wird, innerhalb des Bereichs von 110°C bis 230°C liegt.

## Revendications

1. Un milieu d'enregistrement optique pour enregistrer et lire des informations par un moyen d'irradiation de lumière, comprenant un substrat (1), une première couche plane (32) sur ledit substrat (1) et une deuxième couche (33) formée sur ladite couche de matériau réfléchissant la lumière (32) agencée pour former un alliage avec ledit aluminium de ladite couche réfléchissant la lumière lors de l'action thermique de l'irradiation de lumière, caractérisé en ce que la première couche est une couche réfléchissant la lumière d'aluminium et la deuxième couche est une couche d'indium réagissant à la lumière, l'alliage eutectique formé lors de l'irradiation ayant un point de fusion de 110 à 230°C.

2. Milieu d'enregistrement optique selon la revendication 1, caractérisé en ce que ladite couche d'aluminium (32) a une épaisseur de 70 à 250 nm et ladite couche d'indium (33) a une épaisseur de 70 à 400 nm, et en ce qu'il est structuré de telle façon que lorsqu'une lumière laser est irradiée, le taux de réflexion est approximativement de 70 % pour l'aluminium et le taux de réflexion de l'alliage eutectique In-Al est réduit à moins d'environ 20 %.

3. Un procédé de fabrication d'un milieu d'enregistrement optique comprenant les étapes consistant à :
former une couche de matériau réfléchissant la lumière (32) d'aluminium sur un substrat (1) selon un état plan par projection ou dépôt sous vide ; et
former une couche de matériau réagissant à la lumière (33) d'indium sur ladite couche de matériau réfléchissant la lumière (32) par projection, dépôt sous vide ou dépôt sous vide chimique d'un semi-conducteur qui forme une couche d'alliage à une interface (y) due au facteur thermique par l'irradiation de lumière ;
dans lequel ladite couche de matériau réfléchissant la lumière et la couche de matériau de la couche réagissant à la lumière sont formées dans un environnement de gaz comme O₂, N₂, CH₄ et la pression de chaque gaz est contrôlée, si bien que la température eutectique de l'alliage eutectique formé lors de l'action normale de l'irradiation de lumière se situe dans la gamme de 110°C à 230°C.
